# Europäisches Patentamt
# European Patent Office
# Office européen des brevets

(11) Veröffentlichungsnummer: **0 215 283**
**B1**

(12) **EUROPÄISCHE PATENTSCHRIFT**

(45) Veröffentlichungstag der Patentschrift: **24.10.90**

(51) Int. Cl.⁵: **B 23 B 31/02, B 23 B 29/04**

(21) Anmeldenummer: **86111047.6**

(22) Anmeldetag: **09.08.86**

(54) **Werkzeugkupplung.**

(30) Priorität: **14.09.85 DE 3532891**

(43) Veröffentlichungstag der Anmeldung:
**25.03.87 Patentblatt 87/13**

(45) Bekanntmachung des Hinweises auf die
Patenterteilung:
**24.10.90 Patentblatt 90/43**

(84) Benannte Vertragsstaaten:
**CH DE FR GB IT LI**

(56) Entgegenhaltungen:
**EP-A-0 123 156**
**WO-A-86/04842**
**DE-A-1 900 080**
**DE-A-2 632 435**
**DE-A-3 410 563**
**FR-A-2 529 812**
**GB-A- 505 727**
**US-A-2 816 770**

(73) Patentinhaber: **Fried. Krupp Gesellschaft mit
beschränkter Haftung
Altendorfer Strasse 103
D-4300 Essen 1 (DE)**

(72) Erfinder: **VON Haas, Rainer
Krümmelstrasse 26
D-2054 Geesthacht (DE)**

(74) Vertreter: **Vomberg, Friedhelm, Dipl.-Phys.
Schulstrasse 8
D-5650 Solingen 1 (DE)**

Courier Press, Leamington Spa, England.

**Beschreibung**

Die Erfindung betrifft eine Werkzeugkupplung zur Verbindung eines Werkzeugkopfes und eines Werkzeughalters mit Verdrehsicherung und axialer Verspannung gemäß Oberbegriff von Patentanspruch 1.

Solche Kupplungen werden insbesondere bei den spanabhebenden Werkzeugen benötigt, die automatisch spannbar und handhabbar sind.

Beim Werkzeugwechsel im Rahmen einer automatisierten spanenden Fertigung ist die Schnittstelle bei Bearbeitungszentren der Steilkegel, wobei Werkzeuge mit Steilkegelschaft in einer Kegelhülse aufgenommen und axial verspannt werden. Steilkegelschäfte für Werkzeuge und Spannzeuge sind z.B. in der deutschen Norm DIN 2080 beschrieben. Auf der einen Seite hat der Steilkegel zwar den Vorteil, daß die Kegelform eine günstige Einführung in die entsprechende Aufnahme und eine leichte, lagerichtige Positionierung ermöglicht. Auf der anderen Seite stehen dem jedoch die Nachteile gegenüber, daß die zu wechselnden Werkzeuge recht groß und schwer sind und daß zum Teil erhebliche Zerspannungskräfte rechtwinklig zur Längsachse des Werkzeuges auf den Kegel einwirken, die von dessen Flächen nur unzureichend aufgenommen werden. Den Mangel der fehlenden Plananlage einer solchen Kupplung suchte man dadurch zu beheben, daß man zwecks besserer Abstützung des Werkzeugkopfes einen Mitnehmerflansch an der Werkzeughalterstirnseite zur Anlage bringt. Eine solche Kupplung fordert jedoch eine exakte Fertigung, weil die Verbindung überbestimmt ist. Bei nur geringer Abweichung hat der Kegel in der entsprechend geformten Aufnahmehülse bei anliegendem Flansch Spiel oder der Flansch kommt bei passend aufeinandersitzendem Kegel und Hülse nicht zur Anlage.

In der DE—PS 32 25 173 ist auch schon eine Verbindungsvorrichtung vorgeschlagen worden, bei der zwischen Stirnseite der Spindel und dem umlaufenden Bund des Steilkegels Paßstücke vorgesehen sind, die über Halteschrauben mit dem Mitnahmeflansch verbunden sind und sich an der Stirnfläche abstützen und wodurch sowohl die Plananlage als auch ein volles Tragen im Kegel bewirkt werden soll. Dieses System ist jedoch beim automatischen Werkzeugwechsel wegen des Problems der Fertigungstoleranzen nicht anwendbar, insbesondere scheidet eine solche Kupplung bei der Kombination verschiedener Werkzeuge und Werkzeugaufnahmen in der Praxis aus.

In der den nächstkommenden Stand der Technik beschreibenden DE—OS 33 14 591 wird ein Spannsystem mit Plananlage und einem kurzkegeligen Einpaß vorgeschlagen, bei dem die Kegelhülse des Werkzeughalters und der Kegelzapfen des Werkzeugkopfes so ausgebildet sind, daß der Kegel nur im kleinsten Teil des Durchmessers zum Tragen kommt, während er im größeren Teil im Bereich der Plananlage Luft hat. Die Plananlage soll dadurch gewährleistet sein, daß entweder der Kegelzapfen oder die Kegelhülse im Bereich des kleineren Durchmessers sich so weit elastisch verformen, daß die Plananlage gewährleistet ist. Diese Spannsystem vermeidet jedoch nicht, daß das Werkzeug bei einseitiger Belastung über das Spiel im größeren Kegeldurchmesserbereich seitlich ausweicht und damit das Werkzeug in der Funktion und dem Leistungsvermögen eingeschränkt wird.

Aufgabe der Erfindung ist es, eine Kupplung zwischen einem Werzeughalter und einem Werkzeug zu schaffen, die es unter Vermeidung der vorgenannten Nachteile ermöglicht, daß das Werkzeug automatisch handhabbar und verspannbar ist. Insbesondere soll die Kupplung eine spielfreie Verbindung zwischen Zapfen und entsprechender Aufnahmebohrung gewährleisten und gleichzeitig eine axiale Plananlage zwischen Werkzeughalter und Werkzeug ermöglichen. Zudem soll die Kupplung eine leichte Einführung des Aufnahmezapfens in die Aufnahmebohrung mittels automatischer Wechseleinrichtungen ermöglichen und eine Orientierung über entsprechende Mitnehmer zur Festlegung der Werkzeuglage einschließen.

Die Aufgabe wird durch eine Werkzeugkupplung mit den im Anspruch 1 aufgeführten Merkmalen gelöst. Diese besitzt einen dreistufigen Aufnahmezapfen: Dem Anlagebund benachbart ist ein Kurzkegelstumpf, dem sich ein zylindrisches Zapfenstück anschließt; der Aufnahmezapfen wird endseitig durch einen weiteren Kurzkegelstumpf als Führungsteil abgeschlossen. Der dem Anlagebund benachbarte Kurzkegelstumpf und der endseitige Kurzkegelstumpf weisen gegenüber dem entsprechenden kegeligen Teil der Aufnahmebohrung ein solch geringfügiges Übermaß auf, daß bei einer elastischen Verformung zumindest eines dieser Teile durch axiale Verspannung eine Plananlage von Werkzeugkopf und Werkzeughalter erreicht wird.

Vorzugsweise ist der endseitige Kurzkegelstumpf elastisch verformbar, wodurch das geringe Übermaß ausgeglichen wird.

Die genannte Ausbildung ermöglicht eine sichere und exakte Zentrierung des Werkzeugkopfes im Werkzeughalter. Die aneinander rechtwinklig zur Längsachse liegenden Planflächen geben dem Werkzeug eine genaue axiale Positionierung, nehmen alle in Richtung des Werkzeughalters wirkenden axialen Kräfte auf und wirken nicht zusätzlich auf die Kegelbohrung ein, wodurch die Kegel entlastet werden. Die kurzkegelige Ausbildung im Bereich des größten Zapfendurchmessers bzw. des größten Aufnahmedurchmessers (der Aufnahmebohrung) erlaubt ein leichtes Kuppeln von Werkzeug und Werkzeuggrundhalter, ohne besonders enge Positionstoleranzen einhalten zu müssen. Das Übermaß liegt bevorzugt im Bereich von wenigen Mikrometern. Die elastische Verformbarkeit des endseitigen Führungsteils wird bevorzugt durch einen axialen Freistich an dessen stirnseitigem Ende bewerkstelligt. Das im stirnseitigen Kegelbereich elastisch verformbare Aufnahmeteil des Werkzeughalters erlaubt den Ausgleich von Fertigungstoleranzen zwischen Schaft und Bohrung und eine spielfreie Kupplung.

Bevorzugt ist die Werkzeugkupplung so ausgestaltet, daß im wesentlichen lediglich der vordere kegelige Teil der Aufnahmebohrung, das ist der vordere Teil der Aufnahme, und das endseitige Führungsteil des Aufnahmezapfens elastisch verformbar sind. Diese Ausgestaltung ermöglicht es insbesondere, dem Werkzeug die notwendige Steifigkeit zu geben. Zwei Zentrierbereiche am Anfang und Ende des Spannzapfens bringen zudem einen zusätzlichen Abstützeffekt, der insbesondere lang auskragenden Werkzeugen zugute kommt.

Aus fertigungstechnischen Gründen besitzen der dem Anlagebund benachbarte Kurzkegelstumpf und das als Kurzkegelstumpf ausgebildete Führungsteil den gleichen Kegelneigungswinkel, der vorzugsweise zwischen 1° und 10° liegt.

Im Hinblick auf eine leichte axiale Verspannung zwischen Werkzeugkopf und Werkzeughalter wird eine axial zentrisch angeordnete Differentialgewindeschraube vorgeschlagen, die über ein Gewinde im Werkzeugkopf und eines im Werkzeughalter eine schnelle und sichere Verspannung gewährleistet und den Werkzeugkopf beim Lösen etwas aus der Aufnahmebohrung herausschiebt.

Für die Verdrehsicherung durch mindestens einen Mitnehmer bieten sich vorteilhafterweise zwei Stellen im Werkzeug an: Zum einen ist es möglich, im Bereich des zylindrischen Zapfenstückes an dessen Umfang Mitnehmer vorzusehen, die in eine entsprechende Nut der Aufnahmebohrung eingreifen, zum anderen kann der bzw. können die Mitnehmer stirnseitig an einer radialen Ausbildung des Werkzeugkopfes und Werkzeughalters angeordnet sein. Bei der Gestaltung der Verdrehsicherung ist man jedoch keinesfalls auf mittelbar konventionelle Bauteile beschränkt, gleichermaßen bietet es sich an, die Verdrehsicherung über eine unmittelbare polygonale Verbindung zwischen Werkzeugkopf und Werkzeughalter zu bewerkstelligen. Eine polygonale Verbindung ist z.B. ein Vielzahnprofil, das überall da angeordnet werden kann, wo keine Kegel- bzw. Führungsprofile sind, als z.B. im Bereich des zylindrischen Zapfenstückes.

Im Hinblick darauf, daß die Aufnahme vielfach einem erheblichen Verschleiß ausgesetzt ist, ist nach einer Weiterbildung vorgesehen, die Aufnahmebohrung nicht unmittelbar direkt im Werkzeughalter vorzusehen, sondern mindestens teilweise inmitten einer auswechselbaren Werkzeughalterhülse einzubringen.

Schließlich ist nach einer Weiterbildung der Erfindung vorgesehen, daß der Werkzeughalter auf dem Grund der Aufnahme bzw. Bohrung einen elastisch verformbaren Anschlag bzw. Ring aufweist. Dessen wesentliche Funktion ist eine Vorpositionierung des Werkzeugkopfes in einer Lage, die vermeidet, daß dieser nach dem Einwechseln gegen die Differentialgewindeschraube stößt und das Gewinde beschädigt.

Ausführungsbeispiele der Erfindung sind in den Zeichnungen dargestellt. Die Figuren zeigen jeweils Querschnittsansichten des Werkzeugkopfes in Verbindung mit dem Werkzeughalter; im einzelnen zeigen

Fig. 1 den Werkzeugkopf mit einem Aufnahmezapfen, der zwei Kurzkegel besitzt, in gespanntem Zustand und

Fig. 2 dieselbe Ansicht bei gelöstem Werkzeugkopf.

Ein im wesentlichen zylindrischer Werkzeugkopf 1 weist einen zu seiner Längsachse 10 koaxialen Aufnahmezapfen 3 auf, der aus den Teilen Kurzkegelstumpf 3a, zylindrischem Zapfenstück 3b und endseitigem Führungsteil 3c besteht. Der Aufnahmezapfen 3 weist ferner einen ringförmigen Anlagebund 5 zur stirnseitigen Abstützung am Werkzeughalter 2 sowie einen Mitnehmer 6 zur Indexierung des Werkzeugkopfes 1 auf, der am zylindrischen Zapfenstück vorgesehen ist und in eine entsprechende Nut des Werkzeughalters 2 eingreift. Zum automatischen Werkzeug(Kopf)Wechsel ist eine im Bereich des größten Durchmessers des Werkzeugkopfes 1 neben dem Anlagebund 5 liegende, umlaufende V-förmige Rille 7 für Greifeinrichtungen vorgesehen.

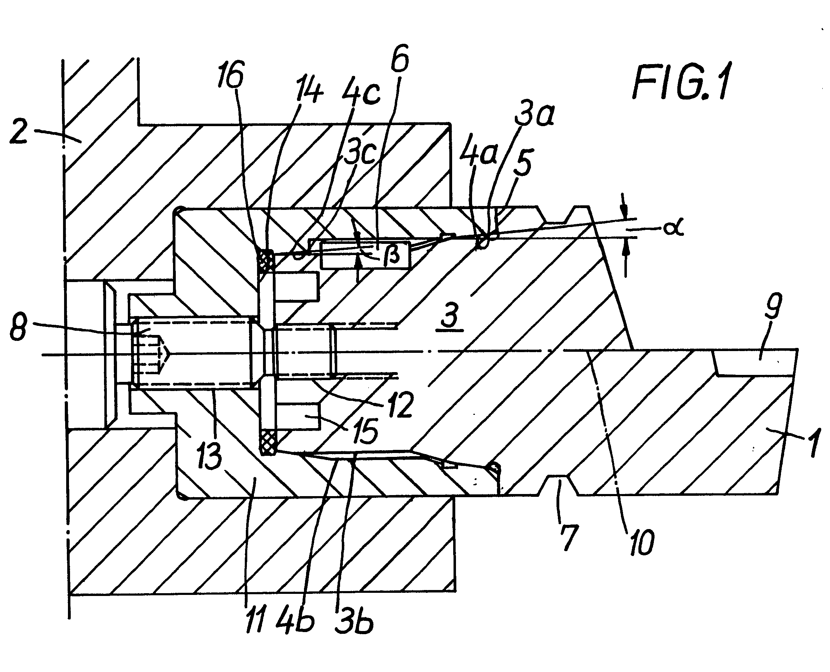

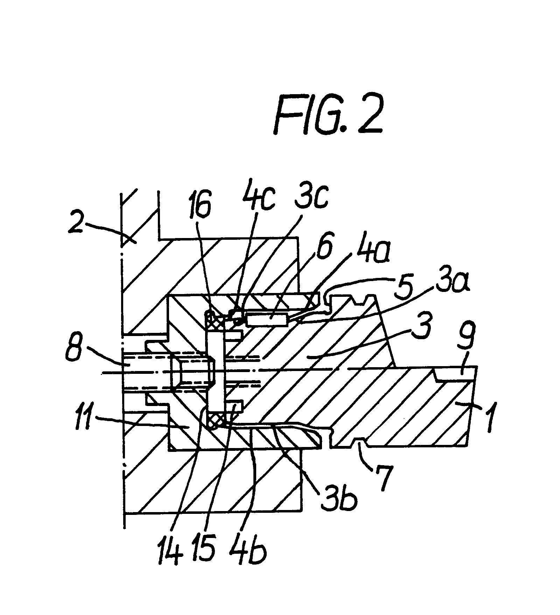

Zur Aufnahme des Aufnahmezapfens 3 dient eine entsprechend geformte Aufnahmebohrung 4a, 4b, 4c, die auch in einer auswechselbaren Aufnahmehülse 11 des Werkzeughalters 2 eingebracht sein kann, wobei ggf., wie in Fig. 1 und 2 dargestellt, die Aufnahmebohrung inmitten einer Aufnahmehülse 11 liegt, die an die verschiedenen Maschinenverhältnisse anpaßbar ist. Die koaxiale Aufnahmebohrung ist in ihrem ersten Teil 4a kegelig ausgebildet. An diesem kegeligen Teil 4a schließt sich eine koaxiale zylindrische Bohrung 4b an, deren Durchmesser größer ist als der kleinste Durchmesser des Innenkegels. Die Bohrung endet in einem kegeligen Teil 4c mit gleich großem Kegelwinkel wie dem ersten Teil 4a sowie einer senkrecht zur gemeinsamen Längsachse 10 von Werkzeugkopf und Werkzeugträger liegenden Planfläche, dem Grund 14 der Bohrung 4a, b, c.

Die elastische Verformbarkeit im kegeligen Kupplungsteil beschränkt sich im wesentlichen auf den Kugelstumpfbereich 4a des Werkzeughalters 2 und die kegelige Ausbildung auf das endseitige Führungsteil 3c des Aufnahmezapfens 3, ohne daß wesentliche Einbußen hinsichtlich der Steifigkeit des Werkzeuges bzw. der Werkzeugkupplung in Kauf zu nehmen sind. Durch einen axialen Freistich 15 am Ende des Aufnahmezapfens 3 läßt sich auf einfache Weise das kegelige Führungsteil 3c elastisch gestalten.

Zur Verspannung des Kopfes dient z.B. eine Differentialgewindeschraube 8, die am Ende des Aufnahmezapfens 3 in einer dort vorgesehenen zentralen Gewindebohrung 12 sowie einer Gewindebohrung 13 im Werkzeughalter 2 geführt wird. Wird diese Differentialgewindeschraube 8 festgezogen, so wird der Aufnahmezapfen 3 entsprechend der Gewindesteigung in die Aufnahmebohrung gezogen, wobei insbesondere die elastische Verformbarkeit des Kurzkegelstumpfes 3c und der Teil 4a der Aufnahmebohrung dazu führen, daß schließlich im Bereich der Kurzkegelstümpfe 3a und 3c die betreffenden Flächen mit den Innenkegelflächen der Aufnahmebohrung 4a, 4c zur Anlage kommen. Gleichzeitig kommt auch die ringförmige Planfläche des Anlagebundes 5 mit der entsprechenden Planfläche des Werkzeughalters zur Anlage. Der so gespannte Kopf mit angezogener Differentialgewindeschraube 8 ist in Fig. 1 dargestellt. Zusätzlich ist auf dem Grund 14 der Bohrung 4a, b, c ein elastisch verformbarer Ring 16 vorgesehen.

Demgegenüber zeigt Fig. 2 dieselbe Anordnung mit gelöstem Werkzeugkopf 1. Die Differentialgewindeschraube 8 ist aus der Gewindebohrung des Aufnahmezapfens herausgedreht, wobei gleichzeitig der Werkzeugkopf mit dem Aufnahmezapfen aus der Aufnahmebohrung 4a, b, c geringfügig herausbewegt wurde. Der Werkzeugkopf kann nunmehr in gelöster Stellung mittels einer Greifeinrichtung über die V-Rille 7 leicht aus dem Werkzeughalter herausgenommen werden.

Entsprechend umgekehrt wird ein neuer Werkzeugkopf eingesetzt. Eine Greifeinrichtung wird den neuen, mit einer Wendeschneidplatte 9 oder ähnlich bestücktem Werkzeugkopf in die Aufnahmebohrung einführen. Sodann wird über die in die Gewindebohrung 13 des Aufnahmezapfens 3 eingreifende Differentialgewindeschraube 8 der Werkzeugkopf in den Werkzeughalter gezogen, bis der Ringbund 5 wie in Fig. 1 dargestellt zur Plananlage gelangt.

Beim Einführen des Werkzeugkopfes trifft dieser mit dem Ende seines Aufnahmezapfens 3 gegen einen im Grund 14 der Aufnahmebohrung eingebauten elastisch verformbaren Anschlag 16, z.B. einen Ring, der zunächst eine Vorpositionierung bewirkt. Dann wird die nicht dargestellte Spanneinrichtung betätigt und die Differentialgewindeschraube 8 eingeschraubt und der Werkzeugkopf im elastischen Bereich des Anschlages 16 gegen seinen Anlagebund 5 gezogen.

Die kegelige Bohrung 4a der Aufnahmehülse 11 ragt stirnseitig etwas über den Werkzeugträger hinaus und ist so ausgebildet, daß sie eine geringe elastische Verformung zuläßt. Ebenfalls weist der Aufnahmezapfen 3 am hinteren Ende im Bereich des dort liegenden kleineren Kurzkegels 3c ebenfalls eine elastische Verformbarkeit auf, die z.B. durch einen axialen Freistich 15 ermöglicht wird.

Prinzipiell können die Kurzkegelwinkel für die Kegelstümpfe 3a bzw. der endseitige Kegelstumpf 3c in den Grenzen liegen, die bisher bei Steilkegeln verwendet worden sind, sie können auch ungleich sein. Im vorliegenden Fall beträgt jedoch der Neigungswinkel $\alpha$ des Kurzkegelstumpfes 3a ebenso ca. 6° wie der Neigungswinkel $\beta$ des Kurzkegelstumpfes 3c.

## Patentansprüche

1. Werkzeugkupplung zur Verbindung eines Werkzeugkopfes (1) und eines Werkzeughalters (2) mit Verdrehsicherung und axialer Verspannung, bei der der als Zerspannungswerkzeug dienende Werkzeugkopf (1) einen Aufnahmezapfen (3) mit teilweise kegelstumpfförmige in Aufnahmeteil und einen benachbarten ringförmigen Anlagebund (5) sowie am Aufnahmeteil anschließenden zylindrischen Zapfenstück (3b) und der Werkzeughalter (2) eine dem Aufnahmezapfen (3) entsprechende Aufnahme (4a, 4b, 4c) und einen ringförmigen Anlagebund aufweisen, wobei der kegelige Aufnahmeteil gegenüber der Aufnahmebohrung (4a, 4b, 4c) ein solch geringfügiges Übermaß hat, daß bei einer elastischen Verformung zumindest eines dieser Teile durch axiale Verspannung eine Plananlage von Werkzeugkopf (1) und Werkzeughalter (2) erreicht wird, dadurch gekennzeichnet, daß der Aufnahmezapfen (3) aus einem dem Anlagebund (5) benachbarten Kurzkegelstumpf (3a), dem zylindrischen Zapfenstück (3b) und einem weiteren kegeligen Führungsteil (3c) besteht, wobei der Kurzkegelstumpf (3a) und der kegeligen Führungsteil (3c) jeweils ein geringes Übermaß gegenüber dem entsprechenden Teil der Aufnahmebohrung besitzen.

2. Werkzeugkupplung nach Anspruch 1, dadurch gekennzeichnet, daß das als Kurzkegelstumpf ausgebildete Führungsteil (3c) elastisch verformbar ist und das geringe Übermaß, das es gegenüber dem entsprechenden (kegeligen) Teil der Aufnahmebohrung (4c) besitzt, bei der Montage von Werkzeug und Werkzeughalter ausgleicht, um die Plananlage zwischen Werkzeugkopf und Werkzeughalter zu erreichen.

3. Werkzeugkupplung nach einem der Ansprüche 1 oder 2, dadurch gekennzeichnet, daß im wesentlichen lediglich der vordere Kegelteil (4a) des Werkzeughalters (2) und das endseitige Führungsteil (3c) des Aufnahmezapfens (3) elastisch verformbar sind.

4. Werkzeugkupplung nach einem der Ansprüche 1 bis 3, dadurch gekennzeichnet, daß der dem Anlagebund (5) benachbarte Kurzkegelstumpf (3a) den gleichen Neigungswinkel des Kegels ($\alpha$) aufweist wie das als Kurzkegelstumpf ausgebildete Führungsteil (3c).

5. Werkzeugkupplung nach Anspruch 4, gekennzeichnet durch einen Neigungswinkel des Kurzkegels (3a, 3c) $1° \leq \alpha \leq 10°$.

6. Werkzeugkupplung nach einem der Ansprüche 1 bis 5, dadurch gekennzeichnet, daß die axiale Verspannung zwischen Werkzeugkopf (1) und Werkzeughalter (2) über eine axiale zentrisch angeordnete Differentialgewindeschraube (8) erfolgt, wobei das eine Gewinde im Werkzeugkopf und das andere im Werkzeughalter eingebracht ist.

7. Werkzeugkupplung nach einem der Ansprüche 1 bis 6, dadurch gekennzeichnet, daß die Verdrehsicherung aus mindestens einem axial angeordneten Mitnehmer (6) besteht, der im zylindrischen Zapfenstück (3b) eingebracht ist und in eine entsprechende Nut der Aufnahmebohrung (4b) eingreift.

8. Werkzeugkupplung nach einem der Ansprüche 1 bis 7, dadurch gekennzeichnet, daß die Verdrehsicherung aus mindestens einem Mitnehmer besteht, der stirnseitig an einer radialen Ausbildung von Werkzeugkopf und Werkzeughalter angeordnet ist.

9. Werkzeugkupplung nach Ansprüchen 1 bis 8, dadurch gekennzeichnet, daß die Verdrehsicherung über polygonale Verbindungen zwischen Werkzeugkopf und Werkzeugträger erfolgt.

10. Werkzeugkupplung nach einem der Ansprüche 1 bis 9, dadurch gekennzeichnet, daß die Aufnahmebohrung (4a, 4b, 4c) des Werkzeughalters (2) mindestens teilweise in einer auswechselbaren Werkzeughülse (11) eingebracht ist.

11. Werkzeugkupplung nach einem der Ansprüche 1 bis 10, dadurch gekennzeichnet, daß im Werkzeughalter (2) auf dem Grund (14) der Aufnahmebohrung (4a, 4b, 4c) ein elastisch verformbarer Anschlag (16), vorzugsweise ein Ring, eingebaut ist.

## Revendications

1. Accouplement d'outil pour relier une tête d'outil (1) et un support d'outil (2) comportant une sécurité à la torsion et un dispositif de pré-serrage axial, dans le cas duquel la tête d'outil (1), servant d'outil d'enlèvement de copeaux, présente un tourillon d'emmanchement (3) comportant une pièce d'emmanchement en partie tronconique et un collet d'appui (5) voisin, en forme d'anneau, ainsi qu'une partie cylindrique de tourillon (3b) se raccordant sur la pièce d'emmanchement, et dans le cas duquel le porte-outil (2) présente un dispositif de maintien (4a, 4b, 4c) adapté au tourillon d'emmanchement (3) et un collet d'appui annulaire, étant entendu que la pièce d'emmanchement conique est, par rapport à l'alésage de maintien (4a, 4b, 4c), légèrement surdimensionnée d'une quantité telle qu'avec une possibilité de déformation élastique d'au moins une de ces pièces par une mise en serrage axial, on obtient un contact plan de la tête d'outil (1) et du porte-outil (2),
caractérisé en ce que le tourillon d'emmanchement (3) est constitué d'un tronc de cône court (3a) voisin du collet d'appui (5), de la partie cylindrique de tourillon (3b) et d'une autre partie de guidage (3c) conique, le tronc de cône court (3a) et la partie de guidage (3c) présentant chacune une faible surdimension par rapport à la partie correspondante de l'alésage de maintien.

2. Accouplement d'outil suivant la revendication 1, caractérisé en ce que la partie de guidage (3c), réalisée sous la forme d'un tronc de cône court, est déformable élastiquement et que la faible surdimension qu'elle possède par rapport à la partie correspondante (conique) de l'alésage de maintien (4c) compense cela, au moment du montage de la tête d'outil et du porte-outil, pour arriver au contact plan entre la tête d'outil et le porte-outil.

3. Accouplement d'outil suivant l'une des revendications 1 ou 2, caractérisé en ce que la partie avant (4a) du porte-outil (2) et la partie de guidage (3c) en extrémité du tourillon d'emmanchement (3) peuvent essentiellement se déformer de façon élastique.

4. Accouplement d'outil suivant l'une quelconque des revendications 1 à 3, caractérisé en ce que le tronc de cône court (3a), voisin du collet d'appui (5) présente le même angle d'inclinaison (α) du cône que la pièce de guidage (3c) réalisée sous la forme d'un tronc de cône court.

5. Accouplement d'outil suivant la revendication 4, caractérisé par un angle d'inclinaison du cône court (3a, 3c) de $1° \leq \alpha \leq 10°$.

6. Accouplement d'outil suivant l'une quelconque des revendications 1 à 5, caractérisé en ce que la mise en serrage axiale entre la tête d'outil (1) et le porte-outil (2) se fait au moyen d'une vis à filetage différentiel (8) disposée au centre de façon axiale, un des filetage étant exécuté sur la tête d'outil et l'autre sur le porte-outil.

7. Accouplement d'outil suivant l'une quelconque des revendications 1 à 6, caractérisé en ce que la sécurité à la torsion est constituée d'au moins un tenon d'entraînement (6) disposé axialement, introduit dans la partie (3b) cylindrique du tourillon et s'engageant dans une rainure correspondante de l'alésage de maintien (4b).

8. Accouplement d'outil suivant l'une quelconque des revendications 1 à 7, caractérisé en ce que la sécurité à la torsion est constituée d'au moins un tenon d'entraînement qui est disposé sur la face frontale, sur une configuration radiale de la tête d'outil et du porte-outil.

9. Accouplement d'outil suivant l'une quelconque des revendications 1 à 8, caractérisé en ce que la sécurité à la torsion est réalisée au moyen d'une liaison polygonale entre la tête d'outil et le porte-outil.

10. Accouplement d'outil suivant l'une quelconque des revendications 1 à 9, caractérisé en ce que l'alésage de maintien (4a, 4b, 4c) du porte-outil (2) est effectué, au moins en partie, dans une douille de maintien (11) interchangeable.

11. Accouplement d'outil suivant l'une quelconque des revendications 1 à 10, caractérisé en ce qu'une butée (16), de préférence un anneau, ayant une forme déformable élastiquement, est montée dans le porte-outil (2), sur le fond (14) de l'alésage de maintien (4a, 4b, 4c).

## Claims

1. A tool coupling for connecting a tool head (1) and a tool holder (2) secured against twisting and axially braced, wherein the tool (1), used as a chip-removing tool, has a receiving pin (3), having a partially frustoconical receiving part and an adjacent annular bearing collar (5) and a cylindrical pin member (3b) adjoining the receiving part, while the tool holder (2) has a receiver (4a, 4b, 4c) corresponding to the receiving pin (3) and an annular bearing collar, the conical receiving part having in relation to the receiving bore (4a, 4b, 4c) a slight oversize such that when at least one of said members is resiliently deformed, the tool head (1) and the tool holder (2) bear flat against one another by axial clamping, characterized in that the receiving pin (3) comprises a short frustrum (3a) adjoining the bearing collar (5), the cylindrical pin member (3b) and another conical guide part, the short frustrum (3a) and the conical guide part (3c) each having a slight oversize in relation to the corresponding part of the receiving bore.

2. A tool coupling according to claim 1, characterized in that the guide part (3c) taking the form of a short frustrum is resiliently deformable and during the assembly of the tool and the tool holder compensates the slight oversize which it has in relation to the corresponding (conical) part of the receiving bore (4c), to cause the tool head and the tool holder to bear flat against one another.

3. A tool coupling according to one of claims 1 or 2, characterized in that substantially only the front conical part (4a) of the tool holder (2) and the end face guide part (3c) of the receiving pin (3) are resiliently deformable.

4. A tool coupling according to one of claims 1 to 3, characterized in that the short frustrum (3a) adjoining the bearing collar (5) has the same angle of inclination of the cone (α) as bhe guide part (3c) taking the form of a short frustrum.

5. A tool coupling according to claim 4, characterized by an angle of inclination of the short frustrum (3a, 3c) of 1°≤α≤10°.

6. A tool coupling according to one of claims 1 to 5, characterized in that the axial bracing between the tool head (1) and the tool holder (2) is performed via an axial, centrally disposed differential screw (8), one screwthreading being formed in the tool head and the other in the tool holder.

7. A tool coupling according to one of claims 1 to 6, characterized in that the security against rotation comprises at least one axially disposed entraining member (6) which is formed in the cylindrical pin member (3b) and engages in a matching groove in the receiving bore (4b).

8. A tool coupling according to one of claims 1 to 7, characterized in that the security against rotation comprises at least one entraining member which is disposed at the end face on a radial formation of the tool head and tool holder.

9. A tool coupling according to claims 1 to 8, characterized in that the security against rotation is produced via polygonal connections between the tool head and the tool carrier.

10. A tool coupling according to one of claims 1 to 9, characterized in that the receiving bore (4a, 4b, 4c) of the tool holder (2) is provided at least partially in an interchangeable tool sleeve (11).

11. A tool coupling according to one of claims 1 to 10, characterized in that a resiliently deformable stop (16), preferably a ring, is incorporated in the tool holder (2) at the bottom (14) of the receiving bore (4a, 4b, 4c).

FIG.1

# FIG. 2